# EUROPÄISCHE PATENTSCHRIFT

(11) **EP 0 839 687 B1**
(45) Veröffentlichungstag und Bekanntmachung des Hinweises auf die Patenterteilung: **08.01.2003**
(21) Anmeldenummer: 97117719.1
(22) Anmeldetag: 10.10.1997
(51) Int. Cl.: B60R 1/06

(54) **Aussenrückblickspiegel für Kraftfahrzeuge**
External rear view mirror for vehicles
Rétroviseur extérieur pour véhicules

(30) Priorität: 31.10.1996 DE 29618937 U
(43) Veröffentlichungstag der Anmeldung: 06.05.1998
(73) Patentinhaber: EM Kunststofftechnik GmbH, 07806 Neustadt an der Orla (DE)
(72) Erfinder: Hübscher, Winfried, 07745 Jena (DE); Engelmann, Rolf Alfred, 07819 Weltwitz (DE)
(74) Vertreter: Depmeyer, Jochen

(56) Entgegenhaltungen:
- EP-A- 0 331 744
- EP-A- 0 544 327
- WO-A-97/06033
- DE-A- 4 022 019
- DE-A- 4 312 847
- GB-A- 2 297 072
- US-A- 4 403 829
- US-A- 4 701 037

## Beschreibung

Die Erfindung betrifft ein Antriebseinheit für einen Außenrückblickspiegel für Kraftfahrzeuge nach dem Oberbegriff des Anspruchs 1.

Bei Spiegeln dieser Art sind Steckverbindungen zum elektrischen Anschluß der Antriebseinheit bekannt. Die zugehörigen Stecker haben jedoch so große Abmessungen, daß sie zum Zwecke der Montage und Demontage des Spiegels nicht ohne weiteres durch die Wanddurchbrüche geführt werden können, um so die Montagearbeiten zu erleichtern. Die elektrischen Verbindungen innerhalb des Gehäuses für die Antriebseinheit werden dabei durch Löten bzw. durch Quetschen, also durch besondere Arbeitsgänge hergestellt.

Aus der EP-A-0331 744 ist eine Antriebseinheit der eingangs genannten Art bekannt. Um die Leiter in dem Gehäuse zu befestigen und ihren Kontakt zu den Polen der Elektromotoren zu sichern sind sie in einem Kunststoffblock eingegossen. Der Kunststoffblock ist mit einer Bohrung auf einen Dorn im Gehäuse gesteckt. Durch Anschmelzen der Spitze des Dorns wird eine unlösbare Verbindung zwischen dem Kunststoffblock mit den Leitern und dem Gehäuse hergestellt. Es werden somit mehrere Arbeitsschritte benötigt, um die Leiter im Gehäuse zu befestigen.

Aus der GB-A-2 297 072 ist ein Außenrückblickspiegel bekannt, bei dem streifenförmige Leiter mit eingesteckten Enden mit den Polen der Motoren in Verbindung stehen, wobei die Leiter entweder jeweils zu Anschlüssen geführt sind, in die ein einzelner Pol des der Stromversorgung dienenden Kabels mit Hilfe einer Gummidichtung eingesetzt werden kann, oder sie sind Teil einer Anschlußeinheit, die von außen an der Antriebseinheit befestigt wird, wobei die Leiter die Gehäusewand durchsetzen und direkt zu den Polen der Elektromotoren geführt sind. Im ersten Fall ergibt sich jedoch der Nachteil schwierig herzustellender, unsicherer Verbindungen. Im zweiten Fall müssen die Anschlußeinheiten wiederum relativ groß sein, da sie der Anordnung der Pole an den Motoren entsprechend ausgebildet sein müssen.

Der Erfindung liegt im wesentlichen die Aufgabe zugrunde, die eingangs erwähnten Spiegel so zu verbessern, daß eine besonders einfache Montage und ein einfacher Zusammenbau des Rückblickspiegels möglich sind.

Diese Aufgabe wird erfindungsgemäß durch die kennzeichnenden Merkmale des Anspruchs 1 gelöst.

Die streifenförmigen Leiter können von Metallstreifen, also kleinen Metallbändern mit flach rechteckigem Querschnitt gebildet werden, die an ihren Enden oder durch abstehende Fahnen ggfs. durch Doppeln die Kontakte bilden können. So ist es möglich, die Streifeneneden unmittelbar in entsprechende Ausnehmungen der Antriebsmotore einzuführen, um dort die elektrischen Anschlüsse herbeizuführen. Zugleich sind aber auch die Streifenenden bzw. abstehenden Fahnen in Parallelstellung - die breiteren Seiten der Enden bzw. Fahnen sind einander zugekehrt - so montiert, daß auf sie von außen ein Stecker aufgeschoben werden kann, um damit die Antriebseinheit elektrisch anzusschließen. Diese in Parallelstellung befindlichen Fahnen bzw. Enden bedingen aufgrund ihrer Parallestellung derart kleine Abmessungen, daß auch die entsprechenden, von außen aufzusetzenden Stecker klein gehalten werden können, um sie so bei den Montagearbeiten durch die für die Kabeldurchführung vorgesehenen Ausnehmungen hindurchfädeln zu können.

Weitere Einzelheiten der Erfindung werden anhand der Zeichnung erläutert, in der ein Ausführungsbeispiel der Erfindung dargestellt ist. Es zeigen:
Fig. 1 einen waagerechten Teilschnitt durch einen Aussenrückblickspiegel für Kraftfahrzeuge,
Fig. 2 das Innere der Antriebseinheit für die Verstellung der Spiegelscheibe in Richtung des Pfeiles II gesehen,
Fig. 3 einen Teilschnitt nach der Linie III - III von Fig. 1, jedoch ohne den Stecker für die Stromzufuhr der Antriebseinheit und
Fig. 4 einen Schnitt durch einen Kontaktstreifen nach der Linie IV - IV von Fig. 2.

Das etwa schalenförmige Gehäuse 1 des Spiegels ist über seinen Fuss 2 am Fahrzeug gelagert. Die Öffnung 3 des Gehäuses 1 zeigt in üblicher Weise gegen die Fahrtrichtung des Fahrzeuges, sie nimmt die Spiegelscheibe 4 auf. Innerhalb dieses Gehäuses 1 befindet sich eine Montageplatte 5 mit einer Durchbrechung 6, in der sich die elektrische Antriebseinheit 7 mit den elektrischen Anschlusskabeln 8 befindet. Die Durchbrechung wird von einem Kragen 9 mit konischen Innenflächen 10 begrenzt.

An der der Öffnung 3 zugekehrten Seite der Antriebseinheit 7 befindet sich eine Pfanne 11 zur Aufnahme eines Kugel 12, die fest mit einer plattenförmigen Halterung 13 verbunden ist. Im Randbereich der Halterung 13 ist diese mit zwei um 90° versetzte Pfannen 14' verbunden, in die durch die Antriebseinheit längsbewegbare Stössel 14 eingreifen, um durch eine Bewegung der Stössel 14 eine Verschwenkung der Halterung 13 bzw. eine Spiegelverstellung im Sinne des Doppelpfeiles 15 herbeizuführen.

Die durch ein Gehäuse 18 gekapselte Antriebseinheit 7 hat im Inneren für die Stösselverstellung geeignete elektrische Motore 19, die über Schneckenräder 20 die Stössel 14 bewegen können. Die Stromzufuhr für jeden Motor 19 erfolgt über Pole 21, die mit einer dreipoligen Steckdose 22 verbunden sind, die ihrerseits über einen Stecker 23 eine Verbindung zu den Anschlusskabeln 8 führt.

Die Verbindung von der Steckdose 22 zu den Polen 21 erfolgt über aus Leitermetall bestehende Streifen 24, die einen flach rechteckigen Querschnitt haben bei einer Breite von etwa 2 - 3 mm und einer Wandstärke von etwa 0.3 - 0.5 mm. vorzugsweise 0.4 mm.

Um die Pole 21 mit den Streifen 24 in Verbindung zu bringen, sind sie an ihren Enden - wie aus Fig. 4 ersichtlich - nach Art einer Fahne 25 nach unten abgewinkelt, die zur Kontaktgabe in die Kontaktseite der Motoren 19 eingeführt werden. Die anderen Enden der Streifen 24 sind seitlich in das Gehäuse der Steckdose 22 eingeführt und bilden dort entweder mit ihren Enden 26 oder mit einer seitlich abstehenden Zunge 27 bei dem mittleren Kontaktstreifen 24' die Kontakte der Steckdose 22, auf die dann der Stecker 23 aufgeschoben wird.

Dabei ist es wichtig, dass innerhalb der Steckdose 22 die breiteren Seiten der Streifen 24 bzw. der Enden 26 und Zunge 27 einander zugekehrt sind und nicht mit ihrer breiteren Seite in einer Ebene liegen. Dadurch ergibt sich eine sehr kompakte Bauweise der Steckdose 22 und des Steckers 23, um so die Enden der Anschlusskabel 8 so wenig wie möglich zu verdicken.

Wie ersichtlich, sind die Streifen 24 in einfacher Weise eingesteckt, also über eine Steckverbindung mit den Polen 21 und der Steckdose 22 verbunden, die ihrerseits ebenfalls durch einen Stecker 23 mit dem Anschlusskabel 8 in leitende, aber lösbare Verbindung gebracht ist. Es bedarf somit keiner Quetsch- oder Lötverbindung innerhalb des Gehäuses für die Antriebseinheit 7, vielmehr erfolgt die Montage in einfacher Weise durch Einstecken der Streifen 24.

Es sei erwähnt, dass ggfs. die Streifenenden 25, 26 und die Zunge 27 durch Umfalten od. dgl. verdickt werden können, um im Bereich der eigentlichen Kontaktgabe die Streifen 24 zu verdicken. Vorzugsweise wird jedoch eine Verdickung von etwa o.8 mm Wandstärke gewählt, um so dem Normsteckmass zu entsprechen.

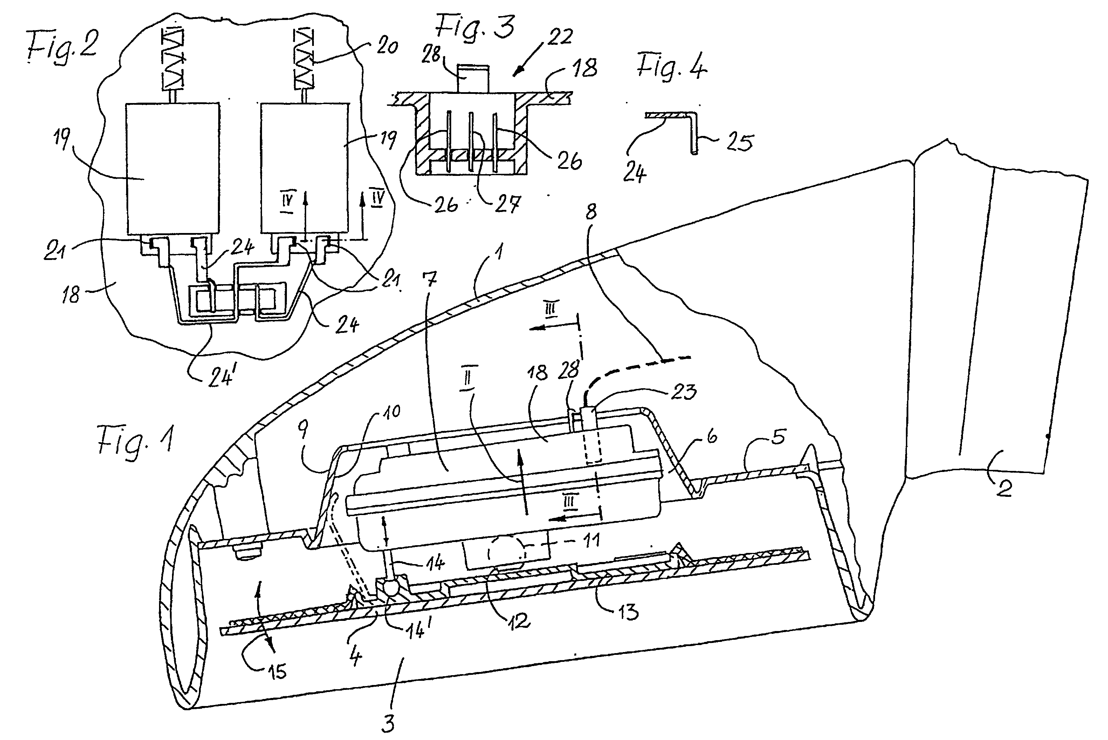

Wie aus Fig. 1 hervorgeht, ist der Stecker 23 durch einen übergreifenden Haken 28 gegen ungewollte Lageveränderungen abgesichert.

## Patentansprüche

1. Elektrisch betriebenen, gekapselt in einem Gehäuse befindlichen Antriebseinheit (7) für einen Außenrückblickspiegel zum Verstellen einer Spiegelscheibe des Außenrückblickspiegels wobei elektrische: Verbindungen innerhalb der Antriebseinheit von streifenförmigen Leitern gebildet sind, und wobei die streifenförmigen Leiter (24) mit ihren frei auslaufenden Enden (26) und/oder abstehenden Zungen (27) die Kontakte der Steckverbindungen für Anschlußkabel (8) der Antriebseinheit (7) bilden, wobei ein Kontakt der Steckverbindungen für die Anschlußkabel (8) von einer abstehenden Zunge (27) eines Leiters gebildet ist, dessen Enden mit jeweils einem Pol (21) der Elektromotoren (19) verbunden sind, und wobei die Pole (21) der Elektromotoren (19) mit eingeführten Enden (25) der Leiter (24) in Verbindung stehen, **dadurch gekennzeichnet, daß** auch für die Verbindung der Pole (21) der Elektromotoren (19) mit den Leitern (24) Steckverbindungen vorgesehen sind, und daß an der Steckverbindungen für die Anschlußkabel (8) die breiteren Seiten der Leiter (24) einander zugekehrt sind, wobei die Leiter (24) eine Breite von etwa 2 - 3 mm und eine Wandstärke von etwa 0,3 - 0,5 mm, vorzugsweise etwa 0,4 mm haben, wobei im Bereich der Steckverbindungen die Wandstärke wesentlich größer sein, vorzugsweise etwa 0,8 mm betragen kann.

2. Außenrückblickspiegel für Kraftfahrzeuge, mit einer elektrisch betriebenen, gekapselt in einem Gehäuse befindlichen Antriebseinheit nach Anspruch 1 zum Verstellen der Spiegelscheibe und einem zu dieser Einheit führenden Kabel zur Speisung der Antriebseinheit, das über Steckverbindungen mit der Antriebseinheit elektrisch verbunden ist.

## Claims

1. Electrically operated drive unit (7), which is encased in a housing, for an external rear-view mirror for adjusting a mirror glass of the external rear-view mirror, electrical connections internally of the drive unit being formed by strip-like conductors, and the strip-like conductors (24) forming, with their freely extending ends (26) and/or protruding projection members (27), the contacts of the plug-in connections for connecting cables (8) of the drive unit, one contact of the plug-in connections for the connecting cables (8) being formed by a protruding projection member (27) of a conductor, the ends of which conductor are each connected to a respective pole (21) of the electric motors (19), and the poles (21) of the electric motors (19) communicating with inserted ends (25) of the conductors (24), **characterised in that** plug-in connections are also provided for the connection between the poles (21) of the electric motors (19) and the conductors (24), and **in that** the wider sides of the conductors (24) face each other at the plug-in connections for the connecting cables (8), the conductors (24) having a width of about 2 - 3 mm and a wall thickness of about 0.3 - 0.5 mm, preferably about 0.4 mm, the wall thickness being substantially greater, preferably about 0.8 mm, in the region of the plug-in connections.

2. External rear-view mirror for automotive vehicles, having an electrically operated drive unit, which is encased in a housing, according to claim 1, for adjusting the mirror glass, and having a cable, leading to this unit, for supplying power to the drive unit, which cable is electrically connected to the drive unit via plug-in connections.

## Revendications

1. Unité (7) d'entraînement d'un rétroviseur extérieur, qui est alimentée électriquement, qui est encapsulée dans un boîtier et qui est destinée à orienter un miroir du rétroviseur extérieur, des liaisons électriques étant formées à l'intérieur de l'unité d'entraînement par des conducteurs en forme de bandes et les conducteurs (24) en forme de bandes formant, par leurs extrémités (26) libres et/ou par des languettes (27) en saillie, les contacts des connexions à enfichage pour le câble (8) de raccordement de l'unité (7) d'entraînement, un contact des connexions à enfichage pour le câble (8) de raccordement étant formé par une languette (27) en saillie d'un conducteur dont les extrémités sont reliées à respectivement un pôle (21) du moteur (19) électrique, et les pôles (21) du moteur (19) électrique étant reliés aux extrémités (25) insérées des conducteurs (24), **caractérisée en ce qu'**il est prévu également pour la liaison des pôles (21) du moteur (19) électrique aux conducteurs (24) des connexions à enfichage et **en ce que**, sur les connexions à enfichage pour le câble (8) de raccordement, les côtés les plus larges des conducteurs (24) sont tournés l'un vers l'autre, les conducteurs (24) ayant une largeur d'environ 2 à 3 mm et une épaisseur de paroi d'environ 0,3 à 0,5 mm, de préférence d'environ 0,4 mm, l'épaisseur de paroi étant, dans la partie des connexions à enfichage, sensiblement plus grande, en pouvant aller de préférence jusqu'à environ 0,8 mm.

2. Rétroviseur extérieur de véhicule automobile comprenant une unité (1) d'entraînement, qui est alimentée électriquement, qui est encapsulée dans un boîtier et qui est destinée à orienter le miroir suivant la revendication 1, et un câble qui mène à cette unité, qui est destiné à alimenter l'unité d'entraînement et qui est relié électriquement à l'unité d'entraînement par des connexions à enfichage.
